# EUROPEAN PATENT APPLICATION

(11) **EP 3 876 549 A1**
(43) Date of publication of application: **08.09.2021**
(21) Application number: 18938571.9
(22) Date of filing: 24.12.2018
(51) Int. Cl.: H04N 21/44, G06Q 10/06, G06K 9/00, G10L 15/26

(54) **VIDEO QUALITY INSPECTION METHOD AND APPARATUS, COMPUTER DEVICE AND STORAGE MEDIUM**

(30) Priority: 02.11.2018 CN 201811301549
(71) Applicant: One Connect Smart Technology Co., Ltd. (Shenzhen), Shenzhen, Guangdong 518000 (CN)
(72) Inventor: FU, Shuting, Hong Kong Cooperation Zone Shenzhen, Guangdong 518000 (CN)
(74) Representative: dompatent von Kreisler Selting Werner - Partnerschaft von Patent- und Rechtsanwälten mbB
(86) International application number: PCT/CN2018/123132
(87) International publication number: WO 2020/087713

(57) **Abstract**

The present application discloses a video quality inspection method for solving the problem of low timeliness during video quality inspection. The method provided by the present application comprises: extracting frames from a target video to obtain video images; performing facial recognition on the video images and detecting whether a face of a designated person is included in the video images to acquire a first detection result corresponding to the video images; performing speech recognition on a speech of the target video to obtain a target text; calculating a required reading rate of the required reading text according to the target text and a preset required reading text; calculating a taboo rate of the taboo text according to the target text and a preset taboo text; detecting whether the required reading rate is higher than a preset first threshold value and the taboo rate is lower than a preset second threshold value to obtain a second detection result; determining to pass the quality inspection of the target video if they are both positive; otherwise, determining not to pass quality inspection of the target video. The present application also provides a video quality inspection apparatus, a computer device, and a storage medium.

## Description

The present application is based on the Chinese invention patent with Application No. 201811301549.9 which is submitted on November 2, 2018 and entitled " VIDEO QUALITY INSPECTION METHOD AND APPARATUS, COMPUTER DEVICE, AND STORAGE MEDIUM", and claims priority thereof.

### TECHNICAL FIELD

The present application relates to the technical field of video processing, and particularly to a video quality inspection method, a video quality inspection apparatus, a computer device, and a storage medium.

### BACKGROUND

With development and improvement of insurance industries, insurance companies have stricter requirements on control of insurance sales processes. At present, when an agent selling insurance products performs links such as identity verification, notice of insurance precautions, signature of an insurance contract and the like with an insurance applicant, audios and videos of the whole processes of these links need to be recorded, the recorded videos will be submitted to a system of an insurance company, and a professional quality inspection person will carry out quality inspection on these videos through the system.

However, with the increase of sales of the insurance products, the number of videos recorded in the insurance transaction processes is also increasing. It is difficult for limited quality inspectors to complete the video quality inspection in time, which is easy to reduce the timeliness of the quality inspection for these videos.

### SUMMARY

Embodiments of the present application provide a video quality inspection method, a video quality inspection apparatus, a computer device, and a storage medium, so as to solve the problem of low timeliness during video quality inspection.

A video quality inspection method, comprising:
extracting frames from a target video to obtain video images;
performing facial recognition on the video images and detecting whether a face of a designated person is included in the video images to acquire a first detection result corresponding to the video images;
performing speech recognition on a speech of the target video to obtain a target text;
calculating a required reading rate of the required reading text according to the target text and a preset required reading text, wherein the required reading rate refers to a proportion of a content of the required reading text contained in the target text to the required reading text;
calculating a taboo rate of the taboo text according to the target text and a preset taboo text, wherein the taboo rate refers to a proportion of a content of the taboo text contained in the target text to the taboo text;
detecting whether the required reading rate is higher than a preset first threshold value and the taboo rate is lower than a preset second threshold value to obtain a second detection result;
determining not to pass quality inspection of the target video if the first detection result or the second detection result is negative;
determining to pass the quality inspection of the target video if the first detection result and the second detection result are both positive.

A video quality inspection apparatus, comprising:
a frame extraction module configured to extract frames from a target video to obtain video images;
a first detection module configured to perform facial recognition on the video images and detect whether a face of a designated person is included in the video images to acquire a first detection result corresponding to the video images;
a speech recognition module configured to perform speech recognition on a speech of the target video to obtain a target text;
a required reading rate calculation module configured to calculate a required reading rate of the required reading text according to the target text and a preset required reading text, wherein the required reading rate refers to a proportion of a content of the required reading text contained in the target text to the required reading text;
a taboo rate calculation module configured to calculate a taboo rate of the taboo text according to the target text and a preset taboo text, wherein the taboo rate refers to a proportion of a content of the taboo text contained in the target text to the taboo text;
a second detection module configured to detect whether the required reading rate is higher than a preset first threshold value and the taboo rate is lower than a preset second threshold value to obtain a second detection result.
a quality inspection failure determination module configured to determine not to pass the quality inspection of the target video if the first detection result or the second detection result is negative;
a quality inspection success determination module configured to determine to pass the quality inspection of the target video if the first detection result and the second detection result are both positive.

A computer device, comprising a memory, a processor, and a computer readable instruction stored in the memory and capable of being executed on the processor, the processor, when executing the computer readable instruction, implements the steps of the above video quality inspection method.

One or more non-volatile readable storage media on which a computer readable instruction is stored, the computer readable instruction, when stored in the computer readable storage media , causes the one or more processors implement the steps of the above video quality inspection method.

Details of one or more embodiments of the present application are set out in the appended drawings and descriptions below, and other features and advantages of the present application will become apparent from the specification, appended drawings and claims.

### DESCRIPTION OF THE DRAWINGS

In order to more clearly illustrate the technical solutions of the embodiments of the present application, the drawings needed to be used in the description of the embodiments of the present application will be briefly introduced below. Obviously, the drawings described below are only some embodiments of the present application, and other drawings may be obtained for those of ordinary skill in the art according to these drawings without paying creative labor.
FIG. 1 is a schematic diagram of an application environment of the video quality inspection method in an embodiment of the present application.
FIG. 2 is a flowchart of the video quality inspection method in an embodiment of the present application.
FIG. 3 is a flow diagram of a step 102 of the video quality inspection method under an application scenario in an embodiment of the present application.
FIG. 4 is a flow diagram of a step 202 of the video quality inspection method under an application scenario in an embodiment of the present application.
FIG. 5 is a flow diagram of a step 301 of the video quality inspection method under an application scenario in an embodiment of the present application.
FIG. 6 is a structural diagram of the video quality inspection apparatus in an embodiment of the present application.
FIG. 7 is a schematic diagram of the computer device in an embodiment of the present application.

### DETAILED EMBODIMENTS

The technical solutions in the embodiments of the present application will be clearly and completely described below in combination with the drawings in the embodiments of the present application. Obviously, the described embodiments are a part of the embodiments of the present application, rather than all the embodiments. Based on the embodiments of the present application, all other embodiments obtained by those of ordinary skill in the art without creative labor fall into the protection scope of the present application.

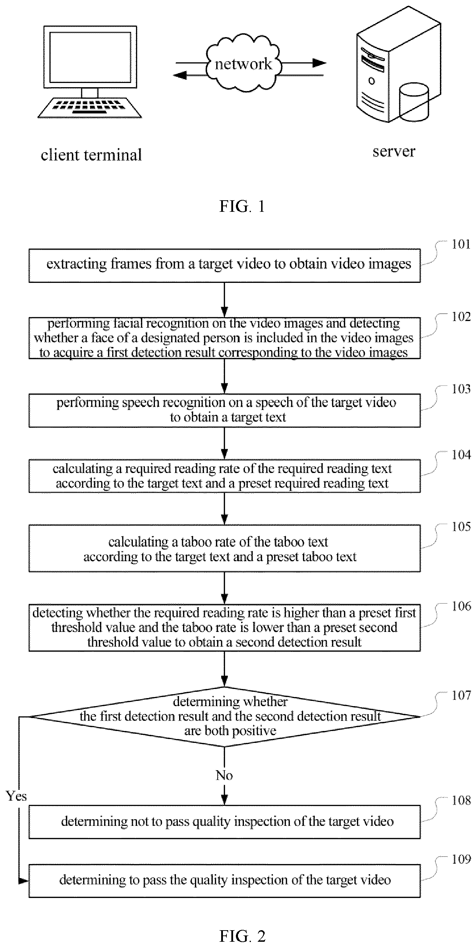

The video quality inspection method provided by the present application can be applied in the application environment as shown in FIG. 1, where a client terminal communicates with a server through a network. The client terminal may be, but is not limited to, any type of personal computer, laptop, smart phone, tablet computer, and portable wearable device. The server may be implemented by an independent server or a server cluster composed of a plurality of servers.

In an embodiment, as shown in FIG. 2, the video quality inspection method is provided. Taking that the method is applied to the server as shown in FIG. 1 as an example, the method includes the following steps.

At 101, extract frames from a target video to obtain video images.

In this embodiment, after determining the target video to be inspected by the method, the server may extract frames from the target video to obtain the video images. Specifically, the server may extract image frames from the target video at an equal time interval to obtain the video images. For example, the image frames are extracted at every 3 seconds as the video images. Assuming that there are 30 seconds in one certain video in total, and then a total of 11 video images can be extracted.

At 102, perform facial recognition on the video images, detect whether a face of a designated person is included in the video images to acquire a first detection result corresponding to the video images.

It could be understood that, after obtaining the video images, the server may perform facial recognition on these video images, such as extracting face features from the video images. The server may detect whether the face of the designated person is included in the video images, so as to obtain the first detection result corresponding to the video images. It could be understood that, when quality inspection is performed on the videos of insurance transaction processes, one of the most important points is to check whether there are insurance applicant and agent for an insurance product transaction in the target video. If there are faces of the insurance applicant and the agent in the target video, then the target video may be considered to meet this requirement. Therefore, specifically, the designated person(s) can be the agent and / or the insurance application, and the detection of whether there is the face of the designated person included in the video images may specifically include: detecting whether facial features in the video images include reserved facial features of the designated person. The server may specify the facial features of a person as the reserved facial features in advance. For example, the facial features of the agent, as an employee of an insurance company, may be reserved on the server, and the agent may require the insurance applicant to perform facial recognition before the insurance applicant performs the insurance transaction, and collect the facial features of the insurance applicant and reserve the collected facial features on the server.

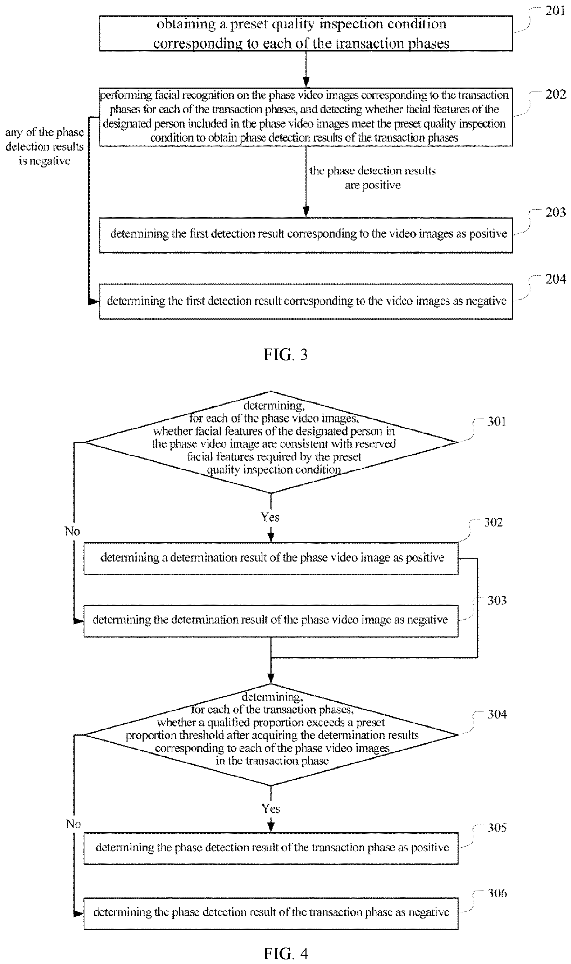

Furthermore, when the quality of the target video is actually inspected, since the target video is obtained by recording a specified transaction process, and the specified transaction process often contains a plurality of transaction phases, so the target video may be divided into a plurality of video segments corresponding to the transaction phases for quality inspection respectively. During the quality inspection, corresponding quality inspection standards may be preset for these transaction phases respectively, namely a quality inspection condition is preset. If the video segments corresponding to all transaction phases meet the preset quality inspection condition, the detection of the target video may be considered as passed. For this purpose, specifically, in this embodiment, the target video is obtained by recording the specified transaction process, the specified transaction process contains the various transaction phases, and the video images include phase video images corresponding to the various transaction phases. As shown in FIG. 3, the step 102 may specifically includes:
at 201, obtaining a preset quality inspection condition corresponding to each of the transaction phases;
at 202, performing facial recognition on the phase video images corresponding to the transaction phases for each of the transaction phases, and detecting whether facial features of the designated person included in the phase video images meet the preset quality inspection condition to obtain phase detection results of the transaction phases;
at 203, if the phase detection results corresponding to each of the transaction phases are positive, determining the first detection result corresponding to the video images as positive;
at 204, if any of the phase detection results corresponding to each of the transaction phases is negative, determining the first detection result corresponding to the video images as negative.

Regarding the step 201, it could be understood that the preset quality inspection condition corresponding to each of the transaction phases may be set in advance on the server, and the preset quality inspection condition corresponding to these transaction phases may be obtained during quality inspection.

Regarding the step 202, as for each of the transaction phases, it can be known that there may be more than one phase video image corresponding to each of the transaction phases. For example, assuming that the target video lasts 30 seconds in total, there are three transaction phases, and each of the three transaction phases lasts 10 seconds, then the frames are extracted at every 2 seconds as the video images when extracting frames, and there are five phase video images in the first transaction phase. The server may perform facial recognition on each of phase video images corresponding to each of the transaction phases, and detect whether the facial features of the designated person included in these phase video images meet the preset quality inspection condition, so as to obtain the phase detection results of the transaction phases. It should be noted that the preset quality inspection condition corresponding to each of the transaction phases may be specifically set according to the actual use. For example, in consideration of the fact that the designated person does not have to face a camera recording the videos all the time in each of the transaction phases, it leads to that the facial features of the designated person cannot be detected in some of the video images, based on this, a relatively loose standard may be set for the preset quality inspection condition corresponding to the transaction phases, for example, if the facial features in the phase video images of a certain proportion of one transaction phase include the reserved facial features of the designated person, then the phase detection result of this transaction phase may be considered as positive. For example, there are five phase video images in certain one transaction phase, and it is set that the preset quality inspection condition is met once more than 60% of the phase video images include the face of the insurance applicant, after detection, the face of the insurance applicant appears on four phase video images among the five phase video images, so it may be considered that the phase detection result of this transaction phase is positive.

Regarding the step 203 and the step 204, it could be understood that when the phase detection results corresponding to each of the transaction phases are positive, it is indicated that the video segments corresponding to each of the transaction phases during the specified transaction process meet the requirements, so it may be determined that the first detection result corresponding to the video images is positive; conversely, when any phase detection result of the phase detection results corresponding to each of the transaction phases is negative, it is indicated that the video segment corresponding to at least one transaction phase does not meet the requirement, so the server may determine that the first detection result corresponding to the video images is negative.

Further, as shown in FIG. 4, the step 202 may specifically include:
at 301, determining, for each of the phase video images, whether facial features of the designated person in the phase video image are consistent with reserved facial features required by the preset quality inspection condition;
at 302, determining, for each of the phase video images, a determination result of the phase video image as positive, if the facial features of the designated person in the phase video image are consistent with the reserved facial features required by the preset quality inspection condition;
at 303, determining, for each of the phase video images, the determination result of the phase video image as negative, if the facial features of the designated person in the phase video image are not consistent with the reserved facial features required by the preset quality inspection condition;
at 304, determining, for each of the transaction phases, whether a qualified proportion exceeds a preset proportion threshold after acquiring the determination results corresponding to each of the phase video images in the transaction phase, here the qualified proportion refers to a proportion of the phase video images having positive determination results to the phase video images in the transaction phase;
at 305, determining the phase detection result of the transaction phase as positive if the qualified proportion exceeds the preset proportion threshold;
at 306, determining the phase detection result of the transaction phase as negative if the qualified proportion does not exceed the preset proportion threshold.

Regarding the above step 301, in one transaction phase, the server may determine, for each of the phase video images, whether the facial features of the designated person in the phase video image are consistent with the reserved facial features required by the preset quality inspection condition.

Regarding the steps 302 and the step 303, it is easy to understand that when the facial features of the designated person in the phase video image are consistent with the reserved facial features required by the preset quality inspection condition, it is indicated that the determination result of the phase video image is positive; on the contrary, when the facial features of the designated person in the phase video image are not consistent with the reserved facial features required by the preset quality inspection condition, it is indicated that the determination result of the phase video image is negative.

Regarding the step 304, it can be seen from the above contents that for each of the transaction phases, considering that the designated person does not have to face the camera recording the videos all the time, this results in failure to detect the facial features of the designated person in some of the phase video images. Based on this, after acquiring the determination results corresponding to each of the phase video images in the transaction phase, the server only needs to determine whether the qualified proportion exceeds the preset proportion threshold. If it exceeds, this transaction phase is indicated to meet the detection requirement on a comprehensive basis; if it does not exceed, this transaction phase is indicated to not meet the detection requirement on a comprehensive basis, here the qualified proportion refers to the proportion of the phase video images having positive determination results to the phase video images in this transaction phase. For example, there are five phase video images in one certain transaction phase, and the determination results of three phase video images are positive, then the qualified proportion is 60%.

Regarding the step 305 and the step 306, it can be seen that this transaction phase is considered to meet the detection requirement on a comprehensive basis if the qualified proportion exceeds the preset proportion threshold, so the server may determine that the phase detection result of this transaction phase is positive; otherwise, this transaction phase is considered to not meet the detection requirement on a comprehensive basis if the qualified proportion does not exceed the preset proportion threshold, so the server may determine that the phase detection result of this transaction phase is negative.

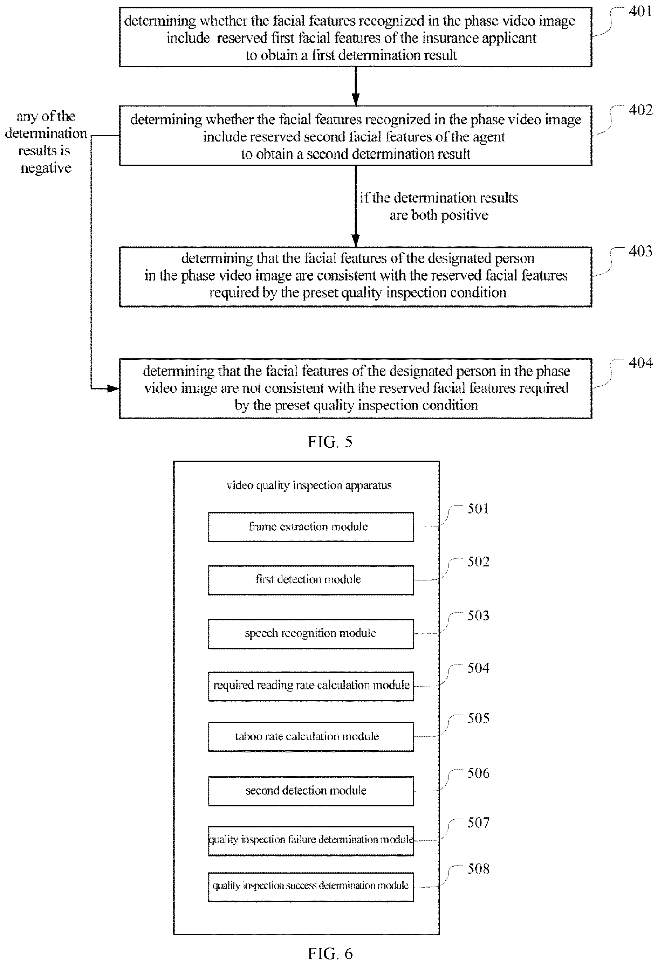

Furthermore, in the following case that the designated transaction process is a sales process of an insurance product and the designated person includes the agent and the insurance applicant of the sales process, as shown in FIG. 5, the step 301 of determining whether the facial features of the designated person in the phase video image are consistent with the reserved facial features required by the preset quality inspection condition may specifically include:
at 401, determining whether the facial features recognized in the phase video image include reserved first facial features of the insurance applicant to obtain a first determination result;
at 402, determining whether the facial features recognized in the phase video image include reserved second facial features of the agent to obtain a second determination result;
at 403, determining that the facial features of the designated person in the phase video image are consistent with the reserved facial features required by the preset quality inspection condition if the first determination result and the second determination result are both positive;
at 404, determining that the facial features of the designated person in the phase video image are not consistent with the reserved facial features required by the preset quality inspection condition if the first determination result or the second determination result is negative.

Regarding the step 401 and the step 402, it could be understood that when the designated person includes the agent and the insurance applicant, the server may determine whether the faces of the agent and the insurance applicant are included in the phase video image respectively, specifically, the server may determine whether the facial features recognized in the phase video image include the reserved first facial features of the insurance applicant to obtain the first determination result, and may determine whether the facial features recognized in the phase video image include the reserved second facial features of the agent to obtain the second determination result.

Regarding the step 403 and the step 404, after obtaining the first determination result and the second determination result through determination, it is indicated that the face of the agent and the face of insurance applicant are both included in this phase video image when the first determination result and the second determination result are both positive, therefore it may be determined that the facial features of the designated person in this phase video image are consistent with the reserved facial features required by the preset quality inspection condition; on the contrary, it is indicated that at least the face of the agent or the face of insurance applicant is absent in this phase video image when the first determination result or the second determination result is negative, therefore it may be determined that the facial features of the designated person in this phase video image are not consistent with the reserved facial features required by the preset quality inspection condition.

At 103, perform speech recognition on a speech of the target video to obtain a target text.

It could be understood that the above steps 101-102 are mainly aimed to perform quality inspection for the images in the target video, while the following steps 103-106 are aimed to perform quality inspection for the speeches in the target video, and these two parts of steps may be performed independently. Those skilled in the art should understand that there is no strict execution sequence between the steps 101-102 and the steps 103-106.

Regarding the step 103, after obtaining the target video, the server may perform speech recognition on the speech of the target video, that is, the speech recognition is performed on the voice in the target video, so as to obtain the target text.

At 104, calculate a required reading rate of the required reading text according to the target text and a preset required reading text, here the required reading rate refers to a proportion of a content of the required reading text contained in the target text to the required reading text.

It could be understood that a required reading statement may be specified for the designated person in the specified transaction process. For example, the agent selling the insurance must tell the insurance applicant in detail about the precautions and risks etc. of the insurance, and record it into the videos. Therefore, it is necessary to investigate whether the required reading text is included in the speech during the quality inspection of the speech of the target video. The server can calculate the required reading rate of the required reading text according to the target text and the preset required reading text, and the required reading rate refers to the proportion of the content of the required reading text contained in the target text to the required reading text. For example, providing that the required reading text includes ten specified statements, it is found that the target text contains nine specified statements through detecting the target text, therefore the proportion of the content of the required reading text contained in the target text to the required reading text is 90%, that is, the required reading rate is 90%.

At 105, calculate a taboo rate of the taboo text according to the target text and a preset taboo text, here the taboo rate refers to a proportion of a content of the taboo text contained in the target text to the taboo text.

In contrast to the required reading text, a taboo statement may be specified for the designated person in the designated transaction process, such as an abusive language that cannot be spoken when the agent selling insurance communicates with the insurance applicant. Based on this, it is necessary to investigate whether there is a taboo text in the speech of the target video during the quality inspection for the speech of the target video. The server may calculate the taboo rate of the taboo text according to the target text and the preset taboo text, here the taboo rate refers to the proportion of the content of the taboo text contained in the target text to the taboo text. For example, providing that the preset taboo text includes ten specified statements, and it is found that the target text contains one of the specified statements through detecting the target text, therefore the proportion of the content of the taboo text contained in the target text to the taboo text is 10%, that is, the taboo rate is 10%.

At 106, detect whether the required reading rate is higher than a preset first threshold value and the taboo rate is lower than a preset second threshold value to obtain a second detection result.

In the specified transaction process, it is usually required that the above-mentioned required reading rate must be up to a certain value, while the taboo rate needs to be lower than a certain value. Therefore, the server may preset the first threshold value and the second threshold value in advance, and then detect whether the required reading rate is higher than the preset first threshold value and the taboo rate is lower than the preset second threshold value to obtain the second detection result. Among them, the higher the first threshold value, the higher the reading ratio of the required reading text in the specified transaction process; the lower the second threshold value, the lower the reading ratio of the taboo text in the specified transaction process. Therefore, in the specified transaction process of certain one insurance product, the preset first threshold value may be set as 90%, the preset second threshold value may be set as 0, and that the preset second threshold value is 0 means that the taboo text cannot appear in the target video of the specified transaction process, for example, any abusive statement cannot appear.

At 107, determine whether the first detection result and the second detection result are both positive, perform step 108 if they are both positive, and perform the step 109 if they are not both positive.

At 108, determine not to pass the quality inspection of the target video.

At 109, determine to pass the quality inspection of the target video.

Regarding the step 107, the step 108 and the step 109, both the images and the speech of the target video are required to pass the quality inspection with regard to the quality inspection of the target video. Therefore, if the first detection result or the second detection result is negative, then it may be determined that the quality inspection of the target video is not passed; on the contrary, if the first detection result and the second detection result are both positive, then the quality inspection of the target video may be determined as passed.

Furthermore, in this embodiment, after the automatic quality inspection is performed for the target video by the server, no matter whether the quality inspection is passed or not, the target video may be randomly inspected to a manual quality inspection post for inspection. In order to facilitate the staff to check the automatic quality inspection of the target video, important time points of the target video during the quality inspection process may be marked, and links switching to these time points may be set, so as to facilitate the staff to inspect rapidly. Specifically, the method may further include one or more of the following four marking manners.

A first manner: mark a first time point of a playing start position of a reading-missed phase in the target video, here the reading-missed phase refers to a transaction phase where the required reading text of the target text is missed reading, and a link switching to the target video and starting play from the first time point is provided at the marked first time point. In this first manner, the first time point of the playing start position of the reading-missed phase in the target video may be marked, and the switching link is provided at this first time point, and the server opens this target video automatically and positions to the playing start position of the reading-missed phase once the staff is capable of clicking this first time point directly, which greatly facilitates the staffs randomly inspection.

A second manner: mark a second time point of a playing start position of a taboo phase in the target video, here the taboo phase refers to a transaction phase where the taboo text of the target text exists, and a link switching to the target video and starting play from the second time point is provided at the marked second time point. Regarding the second manner having the same principle of the first manner, the server may mark the second time point of the playing start position of the taboo phase in the target video, and the switching link is provided at this second time point, and the server opens this target video automatically and positions to the playing start position of the taboo phase once the staff is capable of clicking this second time point directly, which greatly facilitates the staffs randomly inspection.

A third manner: mark a third time point of a playing start position of each of the transaction phases in the target video, and a link switching to the target video and starting play from the third time point is provided at the marked third time point. Regarding the third manner, sometimes the staff wants to check the images and speech of certain one transaction phase in the randomly inspected target video, therefore the server may also mark the third time point of the playing start position of each of the transaction phases in the target video, and the switching link is provided at this third time point, and the server opens this target video automatically and positions to the playing start position of this transaction phase once the staff is capable of clicking this third time point directly.

A fourth manner: mark a fourth time point of a playing position of each of the video images in the target video, and a link switching to the playing position at the fourth time point in the target video is provided at the marked fourth time point. In the fourth manner, the video images are extracted from the target video during the process of automatic quality inspection. In order to facilitate the staff to check one or some video images, the server may further mark the fourth time point of the playing position of each of the video images in the target video, and the switching link is provided at this fourth time point, and the server opens this target video automatically and positions to the playing position of this video image once the staff is capable of clicking this fourth time point corresponding to certain one video image.

It can be seen from the above contents that in the embodiments of the present application, firstly frame extraction is performed on the target video to obtain the video images; then facial recognition is performed on the video images and it is detected whether the face of the designated person is included in the video images, so as to obtain the first detection result corresponding to the video images; on the other hand, speech recognition is performed on the speech of the target video to obtain the target text; then, the required reading rate of the required reading text is calculated according to the target text and the preset required reading text, and the required reading rate refers to the proportion of the content of the required reading text included in the target text to the required reading text; and then, the taboo rate of the taboo text is calculated according to the target text and the preset taboo text, and the taboo rate refers to the proportion of the content of the taboo text contained in the target text to the taboo text; finally, it is detected whether the required reading rate is higher than the preset first threshold value and the taboo rate is lower than the preset second threshold value to obtain the second detection result; it is determined to not pass the quality inspection of the target video if the first detection result or the second detection result is negative; and it is determined to pass the quality inspection of the target video if the first detection result and the second detection result are both positive. It can be seen that, through dividing the target video into two parts, i.e., video images and speech, for separate quality inspection, and it is determined on a comprehensive basis whether the quality inspection of the target video is passed or not according to the first detection result obtained by detecting the video images and the second detection result obtained by detecting the speech, which can not only complete the quality inspection for the videos more accurately, but also improve the quality inspection efficiency for the videos, and ensure the timeliness of the quality inspection for the videos in the face of a large number of videos needing to perform the quality inspection.

It should be understood that the sequence number of each step in the above embodiments does not mean the sequence of execution, and the execution sequence of each process shall be determined by its function and internal logic, and shall not constitute any restriction on the implementation process of the embodiments of the application.

In an embodiment, the video quality inspection apparatus is provided, which is one-to-one corresponding to the video quality inspection method in the above embodiments. As shown in FIG. 6, the video quality inspection apparatus includes a frame extraction module 501, a first detection module 502, a speech recognition module 503, a required reading rate calculation module 504, a taboo rate calculation module 505, a second detection module 506, a quality inspection failure determination module 507 and a quality inspection success determination module 508. The detailed description of each functional module is as follows.

The frame extraction module 501 is configured to extract frames from a target video to obtain video images.

The first detection module 502 is configured to perform facial recognition on the video images, detect whether a face of a designated person is included in the video images to acquire a first detection result corresponding to the video images.

The speech recognition module 503 is configured to perform speech recognition on a speech of the target video to obtain a target text.

The required reading rate calculation module 504 is configured to calculate a required reading rate of the required reading text according to the target text and a preset required reading text, here the required reading rate refers to a proportion of a content of the required reading text contained in the target text to the required reading text.

The taboo rate calculation module 505 is configured to calculate a taboo rate of the taboo text according to the target text and a preset taboo text, here the taboo rate refers to a proportion of a content of the taboo text contained in the target text to the taboo text.

The second detection module 506 is configured to detect whether the required reading rate is higher than a preset first threshold value and the taboo rate is lower than a preset second threshold value to obtain a second detection result.

The quality inspection failure determination module 507 is configured to determine not to pass the quality inspection of the target video if the first detection result or the second detection result is negative.

The quality inspection success determination module 508 is configured to determine to pass the quality inspection of the target video if the first detection result and the second detection result are both positive.

Furthermore, the target video is obtained by recording a designated transaction process, the designated transaction process includes a plurality of transaction phases, and the video images may include phase video images corresponding to each of the transaction phases.

The first detection module may include:
a quality inspection condition acquisition unit configured to obtain a preset quality inspection condition corresponding to each of the transaction phases;
a phase detection unit configured to perform facial recognition on the phase video images corresponding to the transaction phases for each of the transaction phases and detect whether facial features of the designated person included in the phase video images meet the preset quality inspection condition to obtain phase detection results of the transaction phases;
a first determination unit configured to determine the first detection result corresponding to the video images as positive if the phase detection results corresponding to each of the transaction phases are positive;
a second determination unit configured to determine the first detection result corresponding to the video images as negative if any of the phase detection results corresponding to each of the transaction phases is negative.

Further, the phase detection unit may include:
a facial feature determination subunit configured to determine, for each of the phase video images, whether facial features of the designated person in the phase video image are consistent with reserved facial features required by the preset quality inspection condition;
a first determination subunit configured to determine, for each of the phase video images, a determination result of the phase video image as positive, if the facial features of the designated person in the phase video image are consistent with the reserved facial features required by the preset quality inspection condition;
a second determination subunit configured to determine, for each of the phase video images, the determination result of the phase video image as negative, if the facial features of the designated person in the phase video image are not consistent with the reserved facial features required by the preset quality inspection condition;
a qualified proportion determination subunit configured to determine, for each of the transaction phases, whether a qualified proportion exceeds a preset proportion threshold after acquiring the determination results corresponding to each of the phase video images in the transaction phase, here the qualified proportion refers to a proportion of the phase video images having positive determination results to the phase video images in the transaction phase;
a third determination subunit configured to determine the phase detection result of the transaction phase as positive if a determination result of the qualified proportion determination subunit is positive;
a fourth determination subunit configured to determine the phase detection result of the transaction phase as negative if the determination result of the qualified proportion determination subunit is negative.

Further, the facial feature determination subunit may include:
a first judgement subcell configured to determine whether the facial features recognized in the phase video image include reserved first facial features of an insurance applicant to obtain a first determination result;
a second judgement subcell configured to determine whether the facial features recognized in the phase video image include reserved second facial features of the agent to obtain a second determination result;
a first determination subcell configured to determine that the facial features of the designated person in the phase video image are consistent with the reserved facial features required by the preset quality inspection condition if the first determination result and the second determination result are both positive;
a second determination subcell configured to determine that the facial features of the designated person in the phase video image are not consistent with the reserved facial features required by the preset quality inspection condition if the first determination result or the second determination result is negative.

Further, the video quality inspection apparatus may further include:
a first marking module configured to mark a first time point of a playing start position of a reading-missed phase in the target video, here the reading-missed phase refers to a transaction phase where the required reading text of the target text is missed reading, and a link switching to the target video and starting play from the first time point is provided at the marked first time point; and / or
a second marking module configured to mark a second time point of a playing start position of a taboo phase in the target video, here the taboo phase refers to a transaction phase where the taboo text of the target text exists, and a link switching to the target video and starting play from the second time point is provided at the marked second time point; and / or
a third marking module configured to mark a third time point of a playing start position of each of the transaction phases in the target video, here a link switching to the target video and starting play from the third time point is provided at the marked third time point; and / or
a fourth marking module configured to mark a fourth time point of a playing position of each of the video images in the target video, here a link switching to the playing position at the fourth time point in the target video is provided at the marked fourth time point.

The specific definition of the video quality inspection apparatus refers to the definition of video quality inspection method above, which will not be repeated herein again. Whole or part of the modules in the video quality inspection apparatus may be realized by software, hardware or a combination thereof. The above modules may be embedded in or independent of a processor in a computer device in the form of hardware, or be stored in a memory of the computer device in the form of software, so as to facilitate the processor to call the modules and perform the corresponding operations of the above modules.

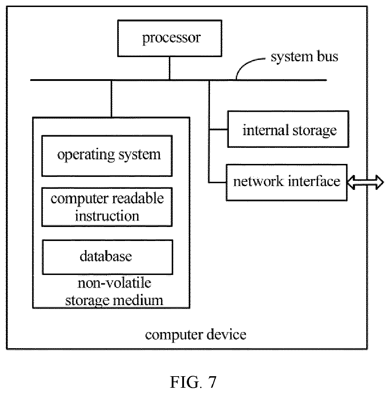

In an embodiment, the computer device is provided, which may be a server, and its internal structure diagram may be as shown in FIG. 7. The computer device includes a processor, a memory, a network interface and a database connected by a system bus. The processor of the computer device is configured to provide calculation and control capabilities. The memory of the computer device includes a nonvolatile storage medium and an internal storage. The nonvolatile storage medium stores an operating system, a computer-readable instruction and the database. The internal storage provides an execution environment for the operating system in the nonvolatile storage medium and the computer-readable instruction. The database of the computer device is configured to store data involved in the video quality inspection method. The network interface of the computer device is configured to communicate with an external terminal through network connection. The computer-readable instruction is executed by the processor to realize the video quality inspection method.

In an embodiment, the computer device is provided, which includes a memory, a processor, and a computer-readable instruction stored on the memory and capable of being executed on the processor. The processor, when executing the computer-readable instruction, implements the steps of the video quality inspection method in the above embodiments, for example, the steps from 101 to 109 as shown in FIG. 2. Alternatively, the processor, when executing the computer-readable instruction, implements the functions of the modules / units of the video quality inspection apparatus in the above embodiments, such as the functions of the modules from 501 to 508 as shown in FIG. 6. To avoid repetition, it will not be repeated herein again.

In an embodiment, the computer-readable storage medium is provided, the one or more non-volatile readable storage media storing a computer-readable instruction. The computer-readable instruction, when executed by one or more processors, makes the one or more processors implement the steps of the video quality inspection method in the embodiments of the above methods when executing the computer-readable instruction. Alternatively, regarding the one or more non-volatile readable storage media storing a computer-readable instruction, the computer-readable instruction, when executed by one or more processors, makes the one or more processors implement the functions of the modules / units in the video quality inspection apparatus in the embodiments of the above apparatus when executing the computer-readable instruction. To avoid repetition, it will not be repeated herein again.

A person of ordinary skill in the art can understand that the implementation of all or part of the processes in the embodiments of the above methods may be completed by instructing related hardware with the computer-readable instruction. The computer-readable instruction may be stored in the non-volatile computer-readable storage medium. When the computer-readable instruction is executed, the processes of the embodiments of the above methods may be included_{∘} Any reference to the memory, the storage, the database or other media used in the embodiments provided by the present application may include non-volatile and / or volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache memory. As an illustration and not a limitation, the RAM is available in many forms, such as static RAM (SRAM), a dynamic RAM (DRAM), a synchronous DRAM (SDRAM), a double data rate SDRAM (DDRSDRAM), an enhanced SDRAM (ESDRAM), a synchronous chain (Synchlink) DRAM (SLDRAM), a memory bus (Rambus) direct RAM (RDRAM), a direct rambus dynamic RAM (DRDRAM), and a rambus dynamic RAM (RDRAM), etc.

Those skilled in the art can clearly understand that for the convenience and conciseness of the description, only the division of the above functional units and modules is taken as an example for illustration. In practical applications, the above functions can be allocated to different functional units and modules according to the needs, that is, the internal structures of the apparatus are divided into different functional units or modules to complete all or part of the functions described above.

The above-mentioned embodiments are only used to illustrate, but not to limit, the technical solutions of the present application. Although the present application has been described in detail with reference to the above-mentioned embodiments, those skilled in the art should understand that they can still modify the technical solutions recited in the above-mentioned embodiments, or equivalently substitute some of the technical features. These modifications or substitutions do not deviate the essence of the corresponding technical solutions from the spirit and scope of the technical solutions of the embodiments of the present application, and shall be included in the protection scope of the present application.

## Claims

1. A video quality inspection method, **characterized in that**, the method comprises:
extracting frames from a target video to obtain video images;
performing facial recognition on the video images and detecting whether a face of a designated person is included in the video images to acquire a first detection result corresponding to the video images;
performing speech recognition on a speech of the target video to obtain a target text;
calculating a required reading rate of the required reading text according to the target text and a preset required reading text, wherein the required reading rate refers to a proportion of a content of the required reading text contained in the target text to the required reading text;
calculating a taboo rate of the taboo text according to the target text and a preset taboo text, wherein the taboo rate refers to a proportion of a content of the taboo text contained in the target text to the taboo text;
detecting whether the required reading rate is higher than a preset first threshold value and the taboo rate is lower than a preset second threshold value to obtain a second detection result;
determining not to pass quality inspection of the target video if the first detection result or the second detection result is negative;
determining to pass the quality inspection of the target video if the first detection result and the second detection result are both positive.

2. The video quality inspection method according to claim 1, **characterized in that**, the target video is obtained by recording a designated transaction process, the designated transaction process includes a plurality of transaction phases, and the video images include phase video images corresponding to each of the transaction phases;
wherein the step of performing facial recognition on the video images and detecting whether the face of the designated person is included in the video images to acquire the first detection result corresponding to the video images comprises:
obtaining a preset quality inspection condition corresponding to each of the transaction phases;
performing, for each of the transaction phases, facial recognition on the phase video images corresponding to the transaction phases and detecting whether facial features of the designated person included in the phase video images meet the preset quality inspection condition to obtain phase detection results of the transaction phases;
determining the first detection result corresponding to the video images as positive if the phase detection results corresponding to each of the transaction phases are positive;
determining the first detection result corresponding to the video images as negative if any of the phase detection results corresponding to each of the transaction phases is negative.

3. The video quality inspection method according to claim 2, **characterized in that**, the step of detecting whether facial features of the designated person included in the phase video images meet the preset quality inspection condition to obtain phase detection results of the transaction phases comprises:
determining, for each of the phase video images, whether facial features of the designated person in the phase video image are consistent with reserved facial features required by the preset quality inspection condition;
determining, for each of the phase video images, a determination result of the phase video image as positive, if the facial features of the designated person in the phase video image are consistent with the reserved facial features required by the preset quality inspection condition;
determining, for each of the phase video images, the determination result of the phase video image as negative, if the facial features of the designated person in the phase video image are not consistent with the reserved facial features required by the preset quality inspection condition;
determining, for each of the transaction phases, whether a qualified proportion exceeds a preset proportion threshold after acquiring the determination results corresponding to each of the phase video images in the transaction phase, wherein the qualified proportion refers to a proportion of the phase video images having positive determination results to the phase video images in the transaction phase;
determining the phase detection result of the transaction phase as positive if the qualified proportion exceeds the preset proportion threshold;
determining the phase detection result of the transaction phase as negative if the qualified proportion does not exceed the preset proportion threshold.

4. The video quality inspection method according to claim 3, **characterized in that**, the step of determining whether facial features of the designated person in the phase video image are consistent with reserved facial features required by the preset quality inspection condition comprises:
determining whether the facial features recognized in the phase video image include reserved first facial features of an insurance applicant to obtain a first determination result;
determining whether the facial features recognized in the phase video image include reserved second facial features of an agent to obtain a second determination result;
determining that the facial features of the designated person in the phase video image are consistent with the reserved facial features required by the preset quality inspection condition if the first determination result and the second determination result are both positive;
determining that the facial features of the designated person in the phase video image are not consistent with the reserved facial features required by the preset quality inspection condition if the first determination result or the second determination result is negative.

5. The video quality inspection method according to any of claims 2-4, **characterized in that**, the video quality inspection method further comprises:
marking a first time point of a playing start position of a reading-missed phase in the target video, wherein the reading-missed phase refers to a transaction phase where the required reading text of the target text is missed reading, and a link switching to the target video and starting play from the first time point is provided at the marked first time point; and / or
marking a second time point of a playing start position of a taboo phase in the target video, wherein the taboo phase refers to a transaction phase where the taboo text of the target text exists, and a link switching to the target video and starting play from the second time point is provided at the marked second time point; and / or
marking a third time point of a playing start position of each of the transaction phases in the target video, wherein a link switching to the target video and starting play from the third time point is provided at the marked third time point; and / or
marking a fourth time point of a playing position of each of the video images in the target video, wherein a link switching to the playing position at the fourth time point in the target video is provided at the marked fourth time point.

6. A video quality inspection apparatus, **characterized in that**, the apparatus comprises:
a frame extraction module configured to extract frames from a target video to obtain video images;
a first detection module configured to perform facial recognition on the video images and detect whether a face of a designated person is included in the video images to acquire a first detection result corresponding to the video images;
a speech recognition module configured to perform speech recognition on a speech of the target video to obtain a target text;
a required reading rate calculation module configured to calculate a required reading rate of the required reading text according to the target text and a preset required reading text, wherein the required reading rate refers to a proportion of a content of the required reading text contained in the target text to the required reading text;
a taboo rate calculation module configured to calculate a taboo rate of the taboo text according to the target text and a preset taboo text, wherein the taboo rate refers to a proportion of a content of the taboo text contained in the target text to the taboo text;
a second detection module configured to detect whether the required reading rate is higher than a preset first threshold value and the taboo rate is lower than a preset second threshold value to obtain a second detection result.
a quality inspection failure determination module configured to determine not to pass the quality inspection of the target video if the first detection result or the second detection result is negative;
a quality inspection success determination module configured to determine to pass the quality inspection of the target video if the first detection result and the second detection result are both positive.

7. The video quality inspection apparatus according to claim 6, **characterized in that**, the target video is obtained by recording a designated transaction process, the designated transaction process includes a plurality of transaction phases, and the video images include phase video images corresponding to each of the transaction phases;
the first detection module comprises:
a quality inspection condition acquisition unit configured to obtain a preset quality inspection condition corresponding to each of the transaction phases;
a phase detection unit configured to perform facial recognition on the phase video images corresponding to the transaction phases for each of the transaction phases and detect whether facial features of the designated person included in the phase video images meet the preset quality inspection condition to obtain phase detection results of the transaction phases;
a first determination unit configured to determine the first detection result corresponding to the video images as positive if the phase detection results corresponding to each of the transaction phases are positive;
a second determination unit configured to determine the first detection result corresponding to the video images as negative if any of the phase detection results corresponding to each of the transaction phases is negative.

8. The video quality inspection apparatus according to claim 7, **characterized in that**, the phase detection unit comprises:
a facial feature determination subunit configured to determine, for each of the phase video images, whether facial features of the designated person in the phase video image are consistent with reserved facial features required by the preset quality inspection condition;
a first determination subunit configured to determine, for each of the phase video images, a determination result of the phase video image as positive, if the facial features of the designated person in the phase video image are consistent with the reserved facial features required by the preset quality inspection condition;
a second determination subunit configured to determine, for each of the phase video images, the determination result of the phase video image as negative, if the facial features of the designated person in the phase video image are not consistent with the reserved facial features required by the preset quality inspection condition;
a qualified proportion determination subunit configured to determine, for each of the transaction phases, whether a qualified proportion exceeds a preset proportion threshold after acquiring the determination results corresponding to each of the phase video images in the transaction phase, wherein the qualified proportion refers to a proportion of the phase video images having positive determination results to the phase video images in the transaction phase;
a third determination subunit configured to determine the phase detection result of the transaction phase as positive if a determination result of the qualified proportion determination subunit is positive;
a fourth determination subunit configured to determine the phase detection result of the transaction phase as negative if the determination result of the qualified proportion determination subunit is negative.

9. The video quality inspection apparatus according to claim 8, **characterized in that**, the facial feature determination subunit comprises:
a first judgement subcell configured to determine whether the facial features recognized in the phase video image include reserved first facial features of an insurance applicant to obtain a first determination result;
a second judgement subcell configured to determine whether the facial features recognized in the phase video image include reserved second facial features of the agent to obtain a second determination result;
a first determination subcell configured to determine that the facial features of the designated person in the phase video image are consistent with the reserved facial features required by the preset quality inspection condition if the first determination result and the second determination result are both positive;
a second determination subcell configured to determine that the facial features of the designated person in the phase video image are not consistent with the reserved facial features required by the preset quality inspection condition if the first determination result or the second determination result is negative.

10. The video quality inspection apparatus according to any of claims 7-9, **characterized in that**, the video quality inspection apparatus further comprises:
a first marking module configured to mark a first time point of a playing start position of a reading-missed phase in the target video, wherein the reading-missed phase refers to a transaction phase where the required reading text of the target text is missed reading, and a link switching to the target video and starting play from the first time point is provided at the marked first time point; and / or
a second marking module configured to mark a second time point of a playing start position of a taboo phase in the target video, wherein the taboo phase refers to a transaction phase where the taboo text of the target text exists, and a link switching to the target video and starting play from the second time point is provided at the marked second time point; and / or
a third marking module configured to mark a third time point of a playing start position of each of the transaction phases in the target video, wherein a link switching to the target video and starting play from the third time point is provided at the marked third time point; and / or
a fourth marking module configured to mark a fourth time point of a playing position of each of the video images in the target video, wherein a link switching to the playing position at the fourth time point in the target video is provided at the marked fourth time point.

11. A computer device, comprising a memory, a processor, and a computer readable instruction stored in the memory and capable of being executed on the processor, **characterized in that**, the processor, when executing the computer readable instruction, implements the following steps of:
extracting frames from a target video to obtain video images;
performing facial recognition on the video images and detecting whether a face of a designated person is included in the video images to acquire a first detection result corresponding to the video images;
performing speech recognition on a speech of the target video to obtain a target text;
calculating a required reading rate of the required reading text according to the target text and a preset required reading text, wherein the required reading rate refers to a proportion of a content of the required reading text contained in the target text to the required reading text;
calculating a taboo rate of the taboo text according to the target text and a preset taboo text, wherein the taboo rate refers to a proportion of a content of the taboo text contained in the target text to the taboo text;
detecting whether the required reading rate is higher than a preset first threshold value and the taboo rate is lower than a preset second threshold value to obtain a second detection result;
determining not to pass quality inspection of the target video if the first detection result or the second detection result is negative;
determining to pass the quality inspection of the target video if the first detection result and the second detection result are both positive.

12. The computer device according to claim 11, **characterized in that**, the target video is obtained by recording a designated transaction process, the designated transaction process includes a plurality of transaction phases, and the video images include phase video images corresponding to each of the transaction phases;
wherein the step of performing facial recognition on the video images and detecting whether the face of the designated person is included in the video images to acquire the first detection result corresponding to the video images comprises:
obtaining a preset quality inspection condition corresponding to each of the transaction phases;
performing, for each of the transaction phases, facial recognition on the phase video images corresponding to the transaction phases and detecting whether facial features of the designated person included in the phase video images meet the preset quality inspection condition to obtain phase detection results of the transaction phases;
determining the first detection result corresponding to the video images as positive if the phase detection results corresponding to each of the transaction phases are positive;
determining the first detection result corresponding to the video images as negative if any of the phase detection results corresponding to each of the transaction phases is negative.

13. The computer device according to claim 12, **characterized in that**, the step of detecting whether facial features of the designated person included in the phase video images meet the preset quality inspection condition to obtain phase detection results of the transaction phases comprises:
determining, for each of the phase video images, whether facial features of the designated person in the phase video image are consistent with reserved facial features required by the preset quality inspection condition;
determining, for each of the phase video images, a determination result of the phase video image as positive, if the facial features of the designated person in the phase video image are consistent with the reserved facial features required by the preset quality inspection condition;
determining, for each of the phase video images, the determination result of the phase video image as negative, if the facial features of the designated person in the phase video image are not consistent with the reserved facial features required by the preset quality inspection condition;
determining, for each of the transaction phases, whether a qualified proportion exceeds a preset proportion threshold after acquiring the determination results corresponding to each of the phase video images in the transaction phase, wherein the qualified proportion refers to a proportion of the phase video images having positive determination results to the phase video images in the transaction phase;
determining the phase detection result of the transaction phase as positive if the qualified proportion exceeds the preset proportion threshold;
determining the phase detection result of the transaction phase as negative if the qualified proportion does not exceed the preset proportion threshold.

14. The computer device according to claim 13, **characterized in that**, the step of determining whether facial features of the designated person in the phase video image are consistent with reserved facial features required by the preset quality inspection condition comprises:
determining whether the facial features recognized in the phase video image include reserved first facial features of an insurance applicant to obtain a first determination result;
determining whether the facial features recognized in the phase video image include reserved second facial features of an agent to obtain a second determination result;
determining that the facial features of the designated person in the phase video image are consistent with the reserved facial features required by the preset quality inspection condition if the first determination result and the second determination result are both positive;
determining that the facial features of the designated person in the phase video image are not consistent with the reserved facial features required by the preset quality inspection condition if the first determination result or the second determination result is negative.

15. The computer device according to any of claims 12-14, **characterized in that**, the processor, when executing the computer readable instruction, further implements the following steps of:
marking a first time point of a playing start position of a reading-missed phase in the target video, wherein the reading-missed phase refers to a transaction phase where the required reading text of the target text is missed reading, and a link switching to the target video and starting play from the first time point is provided at the marked first time point; and / or
marking a second time point of a playing start position of a taboo phase in the target video, wherein the taboo phase refers to a transaction phase where the taboo text of the target text exists, and a link switching to the target video and starting play from the second time point is provided at the marked second time point; and / or
marking a third time point of a playing start position of each of the transaction phases in the target video, wherein a link switching to the target video and starting play from the third time point is provided at the marked third time point; and / or
marking a fourth time point of a playing position of each of the video images in the target video, wherein a link switching to the playing position at the fourth time point in the target video is provided at the marked fourth time point.

16. One or more non-volatile readable storage media on which a computer readable instruction is stored, **characterized in that**, the computer readable instruction, when executed by one or more processors, causes the one or more processors implement the following steps of:
extracting frames from a target video to obtain video images;
performing facial recognition on the video images and detecting whether a face of a designated person is included in the video images to acquire a first detection result corresponding to the video images;
performing speech recognition on a speech of the target video to obtain a target text;
calculating a required reading rate of the required reading text according to the target text and a preset required reading text, wherein the required reading rate refers to a proportion of a content of the required reading text contained in the target text to the required reading text;
calculating a taboo rate of the taboo text according to the target text and a preset taboo text, wherein the taboo rate refers to a proportion of a content of the taboo text contained in the target text to the taboo text;
detecting whether the required reading rate is higher than a preset first threshold value and the taboo rate is lower than a preset second threshold value to obtain a second detection result;
determining not to pass quality inspection of the target video if the first detection result or the second detection result is negative;
determining to pass the quality inspection of the target video if the first detection result and the second detection result are both positive.

17. The non-volatile readable storage media according to claim 16, **characterized in that**, the target video is obtained by recording a designated transaction process, the designated transaction process includes a plurality of transaction phases, and the video images include phase video images corresponding to each of the transaction phases;
wherein the step of performing facial recognition on the video images and detecting whether the face of the designated person is included in the video images to acquire the first detection result corresponding to the video images comprises:
obtaining a preset quality inspection condition corresponding to each of the transaction phases;
performing, for each of the transaction phases, facial recognition on the phase video images corresponding to the transaction phases and detecting whether facial features of the designated person included in the phase video images meet the preset quality inspection condition to obtain phase detection results of the transaction phases;
determining the first detection result corresponding to the video images as positive if the phase detection results corresponding to each of the transaction phases are positive;
determining the first detection result corresponding to the video images as negative if any of the phase detection results corresponding to each of the transaction phases is negative.

18. The non-volatile readable storage media according to claim 17, **characterized in that**, the step of detecting whether facial features of the designated person included in the phase video images meet the preset quality inspection condition to obtain phase detection results of the transaction phases comprises:
determining, for each of the phase video images, whether facial features of the designated person in the phase video image are consistent with reserved facial features required by the preset quality inspection condition;
determining, for each of the phase video images, a determination result of the phase video image as positive, if the facial features of the designated person in the phase video image are consistent with the reserved facial features required by the preset quality inspection condition;
determining, for each of the phase video images, the determination result of the phase video image as negative, if the facial features of the designated person in the phase video image are not consistent with the reserved facial features required by the preset quality inspection condition;
determining, for each of the transaction phases, whether a qualified proportion exceeds a preset proportion threshold after acquiring the determination results corresponding to each of the phase video images in the transaction phase, wherein the qualified proportion refers to a proportion of the phase video images having positive determination results to the phase video images in the transaction phase;
determining the phase detection result of the transaction phase as positive if the qualified proportion exceeds the preset proportion threshold;
determining the phase detection result of the transaction phase as negative if the qualified proportion does not exceed the preset proportion threshold.

19. The non-volatile readable storage media according to claim 18, **characterized in that**, the step of determining whether facial features of the designated person in the phase video image are consistent with reserved facial features required by the preset quality inspection condition comprises:
determining whether the facial features recognized in the phase video image include reserved first facial features of an insurance applicant to obtain a first determination result;
determining whether the facial features recognized in the phase video image include reserved second facial features of an agent to obtain a second determination result;
determining that the facial features of the designated person in the phase video image are consistent with the reserved facial features required by the preset quality inspection condition if the first determination result and the second determination result are both positive;
determining that the facial features of the designated person in the phase video image are not consistent with the reserved facial features required by the preset quality inspection condition if the first determination result or the second determination result is negative.

20. The non-volatile readable storage media according to any of claims 17-19, **characterized in that**, the computer readable instruction, when executed by the one or more processors, causes the one or more processors implement the following steps of:
marking a first time point of a playing start position of a reading-missed phase in the target video, wherein the reading-missed phase refers to a transaction phase where the required reading text of the target text is missed reading, and a link switching to the target video and starting play from the first time point is provided at the marked first time point; and / or
marking a second time point of a playing start position of a taboo phase in the target video, wherein the taboo phase refers to a transaction phase where the taboo text of the target text exists, and a link switching to the target video and starting play from the second time point is provided at the marked second time point; and / or
marking a third time point of a playing start position of each of the transaction phases in the target video, wherein a link switching to the target video and starting play from the third time point is provided at the marked third time point; and / or
marking a fourth time point of a playing position of each of the video images in the target video, wherein a link switching to the playing position at the fourth time point in the target video is provided at the marked fourth time point.
